# EUROPÄISCHE PATENTSCHRIFT

(11) **EP 2 835 408 B1**
(45) Veröffentlichungstag und Bekanntmachung des Hinweises auf die Patenterteilung: **17.05.2017**
(21) Anmeldenummer: 14003731.8
(22) Anmeldetag: 07.07.2011
(51) Int. Cl.: C09K 11/67, B42D 15/00, G07D 7/12

(54) **Alkalimetall- und Erdalkalimetall-Niobate und -Tantalate als Sicherheitsmerkmalsstoffe**
Alkali metal and alkaline earth metal niobates and tantalates as materials for security features
Niobate et tantalate de métal alcalin et de métal alcalino-terreux en tant que matières caractéristiques de sécurité

(30) Priorität: 09.07.2010 DE 102010026627
(43) Veröffentlichungstag der Anmeldung: 11.02.2015
(62) Teilanmeldung aus: 11738400.8
(73) Patentinhaber: Giesecke & Devrient GmbH, 81677 München (DE)
(72) Erfinder: Kecht, Johann, 81677 München (DE); Steinlein, Stephan, 80538 München (DE); Stock, Kai Uwe, 82031 Grünwald (DE)
(74) Vertreter: Wessely, Stephan

(56) Entgegenhaltungen:
- US-A1- 2003 032 192
- US-B1- 7 075 707
- BALAKRISHNAIAH R ET AL: "Frequency upconversion fluorescence studies of Er<3+>/Yb<3+>-codoped KNbO3 phosphors", THIN SOLID FILMS, ELSEVIER-SEQUOIA S.A. LAUSANNE, CH, Bd. 517, Nr. 14, 29. Mai 2009 (2009-05-29) , Seiten 4138-4142, XP026094879, ISSN: 0040-6090, DOI: 10.1016/J.TSF.2009.02.035 [gefunden am 2009-02-12]

## Beschreibung

Die vorliegende Erfindung betrifft ein Sicherheitsmerkmal mit mindestens einem Lumineszenzstoff zur Echtheitssicherung eines Gegenstands wie eines Sicherheitselements, eines Sicherheitspapiers oder eines Wertdokuments, sowie mit einem derartigen Sicherheitsmerkmal ausgestattete Sicherheitselemente, Sicherheitspapiere und Wertdokumente.

Sicherheitsmerkmale bzw. Echtheitsmerkmale sind Kennzeichnungsmittel, die es erlauben, ein Produkt wie beispielsweise ein Wertdokument oder eine hochwertige Handelsware vor Fälschung zu schützen bzw. etwaige Fälschungen von Originalen zu unterscheiden. Typischerweise weisen Sicherheitsmerkmale mindestens einen Merkmalsstoff auf, beispielsweise lumineszierende, magnetische oder elektrisch leitfähige Substanzen, die visuell und/ oder maschinell nachgewiesen werden können. Der Merkmalsstoff oder die Merkmalsstoffe sind in einer bestimmten Weise angeordnet, beispielsweise regellos oder in Form eines geometrischen oder figürlichen Musters oder einer Codierung. Diese Anordnung bildet das sogenannte Sicherheitsmerkmal. Sicherheitsmerkmale im Sinne der vorliegenden Erfindung weisen mindestens einen Lumineszenzstoff als Merkmalsstoff auf.

Unter einem Sicherheitselement wird ein Gegenstand wie ein Sicherheitsfaden, ein Etikett, eine Melierfaser, ein Transferelement etc. verstanden, wobei der Gegenstand mindestens ein Sicherheitsmerkmal aufweist und auf einen zu sichernden Gegenstand aufgebracht oder in einen zu sichernden Gegenstand eingebracht werden kann.

Unter einem Sicherheitspapier wird ein Papier verstanden, das bereits mit mindestens einem Sicherheitsmerkmal oder einem Sicherheitselement ausgestattet ist, aber noch nicht umlauffähig ist und ein Zwischenprodukt bei der Herstellung eines Wertdokuments ist. Unter einem Wertdokument wird das umlauffähige Produkt verstanden.

Wertdokumente sind beispielsweise Banknoten, Schecks, Aktien, Wertmarken, Ausweise, Kreditkarten, Pässe und andere Dokumente, sowie Verpackungen oder andere Elemente für die Produktsicherung.

Die Absicherung von Wertdokumenten gegen Fälschung mittels lumineszierender Substanzen ist seit langem bekannt. Beispielsweise ist in EP 0 052 624 B2 offenbart, lumineszierende Substanzen auf der Basis von mit Seltenerdmetallen dotierten Wirtsgittern zu verwenden.

In DE 10 2004 034 189 A1 wird die Verwendung von Seltenerd- und Übergangsmetall-dotierten Verbindungen der Formel XZO₄ als Banknoten-Sicherheitsmerkmal beschrieben, wobei X aus der Reihe zweiwertiger oder dreiwertiger Kationen ausgewählt werden kann, und Z unter anderem Niob oder Tantal sein kann.

Auch die Verwendung lumineszierender Substanzen mit Wirtsgittern aus Alkalimetallniobaten und -tantalaten für Anwendungen auf den Gebieten Laser, nicht lineare Optik, Ferroelektrika, Piezoelektrika ist bekannt. Für diese Anwendungen werden typischerweise aus der Schmelze gezogene Einkristalle verwendet. Aus der Schmelze gezogene Kristalle haben jedoch nicht die ideal-stöchiometrische Zusammensetzung, sondern weisen Gitterfehler auf. Im Falle von Lithiumniobat beispielsweise entsteht durch das Ziehen aus einer kongruenten Schmelze eine leicht von LiNbO₃ abweichende Stöchiometrie mit einem Li-Anteil 48,4 Atomprozent (bezogen auf Li + Nb). Dadurch entstehen in der Struktur Fehlstellen. Auch der kontrollierte Einbau von Dotierstoffen ist beim Ziehen aus der Schmelze schwierig, und die Dotierstoffkonzentrationen in der Schmelze und im Einkristall unterscheiden sich teilweise stark.

Aus US 6,330,939 B1 ist die Verwendung von LiNbO₃ zur gezielten Beeinflussung der Permittivität eines Wertdokuments bekannt. LiNbO₃ weist hier jedoch keine Dotierung auf und luminesziert daher nicht.

Für lumineszierende Sicherheitsmerkmale werden vorzugsweise Stoffe verwendet, bei denen entweder die Absorption oder die Emission außerhalb des sichtbaren Spektralbereichs liegt. Liegen die Emissionen bei Wellenlängen zwischen etwa 400 nm und etwa 700 nm, so sind die lumineszierenden Substanzen bei geeigneter Anregung mit dem Auge nachweisbar. Für manche Anwendungen ist dies erwünscht, beispielsweise bei der Echtheitsprüfung durch Beleuchtung mit UV-Licht. Für die meisten Anwendungen ist es hingegen von Vorteil, wenn die Emission außerhalb des sichtbaren Spektralbereichs liegt, da die Sicherheitsmerkmale dann verdeckt angebracht werden können. Zum Nachweis sind spezielle Detektoren erforderlich.

Lumineszierende Merkmalsstoffe für Sicherheitsmerkmale, also Lumineszenzstoffe mit charakteristischen Eigenschaften, die sich zur Absicherung von Wertdokumenten und insbesondere für eine automatische Echtheitserkennung eignen, sind jedoch in ihrer Zahl beschränkt. Die meisten anorganischen und organischen Lumineszenzstoffe haben uncharakteristische, breite Spektren, eine zu geringe Emissionsintensität oder andere Nachteile, wie beispielsweise eine schwierige Herstellbarkeit. Die Verwendung handelsüblicher Lumineszenzstoffe für Sicherheitsmerkmale ist weniger empfehlenswert.

Die US 2003/0032192 A1 beschreibt fluoreszierende anorganische Nanopartikel sowie deren Herstellung. Im Absatz [0104] werden Wirtsmaterialien genannt, unter anderem auch Niobate und Tantalate. Im Absatz [0108] werden fluoreszierende Nanopartikel aufgelistet, darunter befinden sich die Stoffe LiNbO₃:Nd,Yb und LiNbO₃:Er. Im Absatz [0136] wird die Geeignetheit der Nanopartikel als Sicherheitsmarkierung für Banknoten, Schecks und Scheckkarten erwähnt.

Die US 7,075,707 B1 beschreibt Up-Conversion-Luminophore als emittierendes Material in reflektiven Displays und Polymerzusammensetzungen für Display-Medien. In der Beschreibung werden mit Seltenerdmetallen als Dotiermittel dotierte Wirtsgitter beschrieben, unter anderem auch der Stoff LiNbO₃.

In der Veröffentlichung B. Balakrishnajah et al., "Frequency upconversion fluorescence studies of Er3+/Yb3+-codoped KNbO3 phosphors", Thin Solid Films, 2009, Band 517, Seiten 4138-4142 werden "Frequency-Upconversion"-Fluoreszenzstudien von mit Er³⁺ und Yb³⁺ codotierten KNbO₃-Luminophoren beschrieben.

Ausgehend von diesem Stand der Technik liegt der vorliegenden Erfindung die Aufgabe zugrunde, die Anzahl von Lumineszenzstoffen, die sich zur Herstellung von Sicherheitsmerkmalen bzw. Echtheitsmerkmalen eignen, zu erhöhen, und insbesondere Sicherheitselemente, Sicherheitspapiere und Wertdokumente mit Sicherheitsmerkmalen bereit zu stellen, die die Nachteile des Stands der Technik nicht aufweisen.

Wesentliche Eigenschaften der im Rahmen dieser Erfindung bereit zu stellenden Sicherheitsmerkmals-Lumineszenzstoffe, die bei der vorliegenden Erfindung angestrebt werden, sind insbesondere:
eine einfache Herstellbarkeit mit den definierten, geringen Korngrößen, wie sie für die Einbringung in bzw. Aufbringung auf Wertdokumente erforderlich sind;
eine hohe Emissionsintensität, auch bei geringen Korngrößen, und charakteristische, d. h. gut identifizierbare, Emissionspektren und/oder Absorptionsspektren; und

Emissionen bevorzugt im nahen Infrarotbereich.

Die Aufgabe wird gelöst durch das Sicherheitsmerkmal, wie es im unabhängigen Anspruch 1 angegeben ist, und durch das Sicherheitselement, Sicherheitspapier und das Wertdokument, wie es im unabhängigen Anspruch 6 angegeben ist. Weiterbildungen der vorliegenden Erfindung sind Gegenstand der Unteransprüche.

Das erfindungsgemäße Sicherheitsmerkmal weist mindestens einen Lumineszenzstoff der allgemeinen Formel I auf:

AXO₃:Z (I)

A steht für ein Alkalimetall, bevorzugt Lithium, Natrium oder Kalium, besonders bevorzugt Lithium. Das Alkalimetall hat die Oxidationsstufe +1.

X steht für Niob oder Tantal. Niob und Tantal haben die Oxidationsstufe +5.

O steht für Sauerstoff mit der Oxidationsstufe -2.

Diese Elemente bilden ein Wirtsgitter, in denen die einzelnen Elemente einander ersetzen können (z. B. ein Element A durch ein anderes Element A), soweit es die Stöchiometrie, die Größenverhältnisse und die Kristallstrukturen erlauben.

Die Wirtsgitter sind mit mindestens einem bei geeigneter Anregung lumineszierenden Element bzw. Kation, dem Lumineszenzaktivator Z, dotiert. Der Lumineszenzaktivator Z wird auf Gitterplätzen oder Zwischengitterplätzen des Wirtsgitters eingebaut.

Z steht für Seltenerdmetalle (Scandium, Yttrium, Lanthan, Cer, Praseodym, Neodym, Promethium, Samarium, Europium, Gadolinium, Terbium, Dysprosium, Holmium, Erbium, Thulium, Ytterbium und Lutetium), oder für bestimmte Übergangsmetalle in geeigneten Oxidationsstufen. Die Seltenerdmetalle haben in der Regel die Oxidationsstufe +3, aber Samarium, Europium, Thulium und Ytterbium können auch in der Oxidationsstufe +2 vorkommen, und Cer, Praseodym, Terbium und Dysprosium können in der Oxidationsstufe +4 vorkommen.

Bevorzugte Seltenerdmetallkationen sind Nd³⁺, Dy³⁺, Ho³⁺, Er³⁺, Tm³⁺ und Yb³⁺. Bevorzugte Übergangsmetallkationen sind Ionen der Elemente Titan, Vanadium, Chrom und Mangan, beispielsweise Ti³⁺, V⁴⁺, Cr^{2+/3+/4+/5+}, Mn^{3+/4+/5+/6+}.

Die Struktur der Alkalimetallniobate und Alkalimetalltantalate sowie der Erdalkalimetallniobate und Erdalkalimetalltantalate erlaubt eine Dotierung mit zahlreichen Kationen Z, wobei als Lumineszenzaktivatoren dreiwertige Kationen (beispielsweise Seltenerdmetalle und Chrom) bevorzugt sind. Die Dotierungsmenge beträgt mehr als 0 Gew. %, typischerweise 0.05 bis 5 Gew. % Z, bevorzugt 0.1 bis 2 Gew. % Z, bezogen auf das Gesamtgewicht des Lumineszenzstoffs. Je nach Oxidationsstufe und Einbau des Kations Z auf einem Gitterplatz oder Zwischengitterplatz werden in dem Wirtsgitter bestimmte zusätzliche Ladungen erzeugt. Als Ladungsausgleich können in dem Gitter Fehlstellen generiert werden.

Aufgrund seiner wirtschaftlichen Bedeutung als Baustein in der Nichtlinearen Optik bzw. in Bandpassfiltern für Hochfrequenzschaltungen in Mobiltelefonen etc. befasst sich ein Großteil der wissenschaftlichen Untersuchungen auf dem Gebiet der Alkalimetallniobate speziell mit der Matrix Lithiumniobat. Daher sind an diesem Beispiel die verschiedenen Mechanismen und Einflüsse von Fehlstellen am detailliertesten untersucht worden. In LiNbO₃: SE (SE = Seltenerdkation) ersetzt das dreiwertige Kation meistens ein Lithiumkation auf einem Lithium-Gitterplatz und erzeugt so zwei zusätzliche Ladungen. Als Ladungsausgleich werden pro fünf ersetzten Lithiumkationen zwei Nb⁵⁺-Fehlstellen generiert.

Gitterdefekte wie Fehlstellen führen oft zu einer Verschlechterung der Lumineszenzeigenschaften, so dass zum Ladungsausgleich zusätzliche Elemente in das Wirtsgitter eingebracht werden, um Gitterdefekte zu minimieren. Durch die Minimierung der Gitterdefekte kann eine deutliche Erhöhung der Lumineszenzintensität erreicht werden. Als besonders geeignet hat sich die zusätzliche Dotierung mit Titan-Kationen erwiesen. Im Falle von Alkalimetallniobaten und Alkalimetalltantalaten kann beispielsweise die überschüssige positive Ladung eines Seltenerdmetallkations auf einer Alkalimetall-Position (3+ statt 1+) durch den Einbau von zwei Titankationen (4+) auf Niobat/Tantalat-Plätzen (5+) ausgeglichen werden. Es ergibt sich in diesem Fall ein besonders bevorzugtes Dotierungsverhältnis von zwei Titankationen pro Seltenerdkation.

Die zusätzlichen Elemente, die zum Ladungsausgleich oder aus sonstigen Gründen in das Wirtsgitter eingebaut werden, sind nicht in besonderer Weise beschränkt. Wesentlich sind in erster Linie passende Ionengrößen und - Ladungen um von dem entsprechenden Wirtsgitter toleriert zu werden und in ihm stabilisiert werden zu können.

Zusätzliche Elemente können, außer aus Gründen des Ladungsausgleichs, beispielsweise auch eingebaut werden, wenn der Lumineszenzaktivator Emissionen in einem Wellenlängenbereich aufweist, in dem keine Emissionen gewünscht sind. Dann ist es möglich, durch den Einbau von Ionen, die in dem betreffenden Wellenlängenbereich stark absorbieren, unerwünschte Emissionen in diesem Bereich zu unterdrücken. Um beispielsweise unerwünschte Emissionen im Sichtbaren zu unterdrücken, können in das Wirtsgitter Elemente eingebaut werden, die im sichtbaren Wellenlängenbereich stark absorbieren, beispielsweise Übergangsmetalle wie Fe³⁺, Co²⁺, Ni²⁺. In jenen Wellenlängenbereichen, in denen Emissionen auftreten und beobachtet bzw. nachgewiesen werden sollen, muss das Wirtsgitter natürlich optisch hinreichend transparent sein.

Eine weitere Möglichkeit ist, durch den Einbau von Sensibilisatoren in das Wirtsgitter die Anregbarkeit der Lumineszenzstoffe zu verändern. Die Aktivatoren können entweder durch Energietransfer von umgebenden Gitterionen angeregt werden (Wirtsgittersensibilisierte Lumineszenz) oder durch anderer Fremdionen (Sensibilisatoren), die Energie absorbieren und an die lumineszierenden Aktivatoren weiterleiten. Die Bildung von Aktivator-Sensibilisator-Paaren führt zu veränderten Anregungsspektren bzw. einer höheren Lumineszenzintensität. Bevorzugte Sensibilisatoren sind Seltenerdkationen und Übergangsmetallkationen, und besonders bevorzugt ist Chrom der Oxidationsstufe +3. Beispielsweise kann durch den Einbau von Cr³⁺ in mit Neodym dotiertes Lithiumniobat bei Anregung des Chroms ein Energietransfer von Chrom auf Neodym erreicht werden.

Werden absorbierende Bestandteile auch als Kationen zum Ladungsausgleich benutzt, können, statt zusätzliche absorbierende Bestandteile in das Wirtsgitter einzuführen, die absorbierenden Wirtsgitterbestandteile teilweise durch nicht absorbierende Bestandteile, beispielsweise Aluminium, ersetzt werden. Über den Anteil an derartigen nicht absorbierenden Bestandteilen lässt sich die Absorption und damit die Helligkeit des Lumineszenzstoffs steuern. Dies kann beispielsweise wünschenswert sein, wenn ein Lumineszenzstoff unsichtbar in einer hellen Druckfarbe eingesetzt werden soll oder in ein helles Trägermaterial eingebracht werden soll.

Die Einbaulage der Dotierstoffe auf jeweils Alkali-/Erdalkali- oder Niob-/Tantalplätze hängt unter anderem von der Größe des einzubauenden Kations ab. Zusätzlich können Faktoren wie Ladung des Kations oder die möglichen Sauerstoff-Koordinationspolyeder an den Einbaustellen die Präferenz beeinflussen. In bestimmten Fällen ist auch der Einbau auf beiden Plätzen möglich.

Generell verhalten sich die verschiedenen Matrizen in ihrem Einbauverhalten jedoch ähnlich, wobei tendenziell die größeren Dotierkationen auf Alkali- bzw. Erdalkali-Positionen liegen und die kleineren Kationen Niob- bzw. Tantalpositionen einnehmen. So gibt es z.B. für Lithiumniobat eine Präferenz von Ca²⁺, Mg²⁺, Zn²⁺, La³⁺ für ,A'-Positionen (Li-Ersatz), während z.B. Fe³⁺, Al³⁺, Sc³⁺, Cr³⁺, Zr⁴⁺, Ti⁴⁺, Sn⁴⁺, U⁶⁺, W⁶⁺ präferiert auf ,B'-Positionen (Nb-Ersatz) zu finden sind. Für Stoffe wie das Kalium-Strontium-Niobat K_{0.2}Sr_{0.4}NbO₃ mit tetragonaler Wolframbronze-Struktur, werden die Einbaulagen (A')₂(A")₄(C)₄(B')₂(B")₈O₃₀ beschrieben. Die Größe der Einbaupositionen nimmt dabei in der Reihenfolge A'>A">C ab. Kationen wie Li⁺, Na⁺, K⁺, Sr²⁺, Ba²⁺, Bi³⁺ oder dreiwertige Lanthanidkationen werden bevorzugt auf den A-Lagen eingebaut. Bei bestimmten Kationen wie Li⁺ kann ebenfalls eine teilweise Verteilung auf sonst leere C-Plätze stattfinden. Kationen wie z.B. Fe³⁺, Zr⁴⁺, Ti⁴⁺, W⁶⁺ liegen bevorzugt auf den B-Lagen (Nb-Ersatz).

Zur Erhöhung der chemischen Beständigkeit des Lumineszenzstoffs kann es vorteilhaft sein, den Lumineszenzstoff zu beschichten. Die erfindungsgemäß verwendeten Wirtsgitter sind zwar im Allgemeinen gegenüber äußeren Einflüssen recht stabil und auch in Wasser unlöslich. Sie können jedoch durch starke Säuren angegriffen werden, was ihre Lumineszenzeigenschaften ungünstig verändert oder sogar zerstört. Geeignete Beschichtungen sind beispielsweise Hüllen aus einem Metalloxid, wobei der Metallbestandteil bevorzugt ein Element ist, das ausgewählt ist aus der Gruppe, die aus Aluminium, Barium, Blei, Bor, Lanthan, Magnesium, Silicium, Titan, Zink, Zirconium, Kobalt, Kupfer, Eisen und deren Mischungen besteht. Besonders bevorzugt sind Hüllen aus Siliciumdioxid. Geeignete Beschichtungen und Verfahren sind beispielsweise offenbart in WO 2006/072380.

Wie vorstehend bereits erwähnt, sind bestimmte einzelne Ausführungen der erfindungsgemäß verwendeten Lumineszenzstoffe grundsätzlich bekannt, wurden jedoch bisher nicht für das Gebiet der Echtheitssicherung in Betracht gezogen. Sie erschienen bisher für diesen Zweck nicht geeignet. Ein Grund dafür ist vermutlich, dass die Lumineszenzstoffe bisher vor allem im Zusammenhang mit Laseranwendungen untersucht wurden und deshalb auch auf eine für Laseranwendungen geeignete Weise hergestellt wurden. Für Laseranwendungen sind Einkristalle, bevorzugt möglichst große Einkristalle, erforderlich, und dementsprechend wurden die Lumineszenzstoffe nach einem Verfahren hergestellt, mit dem derartige Einkristalle erhältlich sind, nämlich durch Ziehen aus einer kongruenten Schmelze. Aus derartigen Schmelzen erhält man jedoch keine Alkalimetallniobate und -tantalate mit einer exakten Stöchiometrie von A:X = 1:1, und keine Erdalkalimetallniobate und -tantalate mit der exakten Stöchiometrie B:X = 0,5:1. Die Folge sind Gitterfehler. Außerdem ist es beim Ziehen aus einer Schmelze meistens nicht möglich, einen Kristall zu erhalten, der dieselbe Konzentration an Lumineszenzaktivator oder sonstigen Zusatzstoffen hat wie die Schmelze. Vielmehr können sich die Dotierstoffkonzentrationen in der Schmelze und im Kristall stark unterscheiden. Durch Verarmung oder Anreichung der Dotier- und Zusatzstoffe in der Schmelze entstehen so im Laufe der Synthese zwangsweise Unterschiede und Gradienten in der Dotierstoff- bzw. Zusatzstoffkonzentrationen der entstehenden Kristalle. Derartige Kristalle sind für Zwecke der Echtheitskennzeichnung nur sehr bedingt geeignet.

Erfindungsgemäß werden die Lumineszenzstoffe daher durch Glühen innig vermischter Ausgangsmaterialien hergestellt. Zur Herstellung eines Lumineszenzstoffs der allgemeinen Formel AXO₃:Z werden Oxide der Elemente XZ mit einem Oxid oder einem Hydroxid oder einem Carbonat oder einem Peroxid, bevorzugt einem Carbonat oder einem Hydroxid, besonders bevorzugt einem Carbonat, des Elements A innig vermischt, beispielsweise in einem Mörser miteinander verrieben, und dann bei einer Temperatur von 900 bis 1200°C, bevorzugt bei 1150°C, 1 bis 20h lang, bevorzugt 8 bis 10h lang, geglüht.

Durch geeignetes Abwiegen der Ausgangsmaterialien lässt sich die Stöchiometrie des herzustellenden Lumineszenzstoffs exakt vorherbestimmen. Erfindungsgemäß ist eine Stöchiometrie von A:X = 1:1 erwünscht, und diese Stöchiometrie kann problemlos erhalten werden. Ebenso kann die gewünschte Konzentration an Lumineszenzaktivator Z zuverlässig vorherbestimmt werden.

Es versteht sich, dass das oben genannte stöchiometrische Verhältnis von A:X = 1:1 einen Wert darstellt, der für das Wirtsgitter an sich gilt, der durch die Dotierung mit dem Lumineszenzaktivator Z und gegebenenfalls weiteren Dotierungsstoffen, verändert wird. Werden zusätzliche Elemente in das Wirtsgitter eingebaut, wie der Aktivator Z, Sensibilisatoren, Ladungsausgleichsstoffe oder Quencher, um die Lumineszenz in einem bestimmten Wellenlängenbereich zu unterdrücken, so ändern sich die stöchiometrischen Verhältnisse in der Weise, wie es die eingebaute Menge der zusätzlichen Elemente erfordert, d. h. entsprechend dem Ausmaß, in dem ein bestimmter Gitterbestandteil durch ein anderes Element ersetzt wird. Wird beispielsweise ein Alkalimetall A zu 5% durch ein Element A' ersetzt, während die übrigen Gitterbestandteile unbeeinflusst bleiben, ergibt sich dementsprechend ein stöchiometrisches Verhältnis von A:A':X = 0,95:0,05:1. Ersetzt in LiNbO₃ : Nd das Neodym 5% des Li-Anteils des Wirtsgitters, und werden zum Ladungsausgleich Nb-Fehlstellen erzeugt, ergibt sich das Verhältnis Li: Nb = 0,95 : 0,98. Wird 1% des Li-Anteils des Wirtsgitters durch Nd ersetzt, und durch Einbau von Ti auf Nb-Plätzen für Ladungsausgleich gesorgt, ergibt sich das Verhältnis Li: Nb = 0,99 : 0,98.

Dass beim Ziehen aus einer kongruenten Schmelze einerseits und bei dem erfindungsgemäßen Herstellungsverfahren andererseits unterschiedliche Kristallstrukturen erhalten werden, ist sehr gut am Beispiel von LiNbO₃ ersichtlich. Im Falle von Lithiumniobat entsteht durch das Ziehen aus einer kongruenten Schmelze ein Kristall mit einer Stöchiometrie mit 48,4% Li-Anteil (Li: Nb = 48,4 : 51, 6). Die dadurch entstehenden Fehlstellen sind in der Literatur intensiv untersucht worden, beispielsweise in Chinese Physics Letters, Vol. 22, No. 3 (2005) 588, Tang Li-Qin et. al. "Luminescent Enhancement in Mg- and Er-Codoped LiNbO3 Crystals". Es wurden Verfahren gefunden, die Fehlstellen zu verringern, beispielsweise durch Co-Dotierung mit Magnesium. Die Co-Dotierung mit Magnesium bewirkt bei den aus der Schmelze gezogenen Kristallen eine Verbesserung der Lumineszenzintensität. Es wurde z. B. bei aus kongruenten Schmelzen gezogenem Erbiumdotierten LiNbO₃ festgestellt, dass eine Co-Dotierung mit Magnesium eine signifikante Lumineszenzerhöhung durch Verringerung bestimmter Fehlstellentypen ermöglicht. Bei erfindungsgemäß hergestellten Kristallen ist jedoch überraschenderweise das Gegenteil der Fall. Eine Co-Dotierung von LiNbO₃ mit Magnesium bewirkt keine Verbesserung, sondern eine Verschlechterung der Lumineszenzintensität. Dies wird darauf zurückgeführt, dass das erfindungsgemäß hergestellte Lithiumniobat ein atomares Verhältnis von A:X = 1:1 hat und daher eine unterschiedliche Defektstruktur im Vergleich zu "kongruentem" Lithiumniobat aufweist. Die problemfreie Herstellung von stöchiometrischem AXO₃ durch den Glühprozess stellt eine Verbesserung und Vereinfachung gegenüber dem Kristallziehen aus einer Schmelze dar.

Bei dem erfindungsgemäßen Glühprozess werden keine vereinzelte, unagglomerierte Einkristalle erhalten, erst recht keine großen Einkristalle. Dies macht die erfindungsgemäßen Lumineszenzstoffe zwar für die Anwendungsgebiete Laser, nicht lineare Optik, Ferroelektrika etc., relativ ungeeignet, stört aber bei dem erfindungsgemäßen Verwendungszweck in keiner Weise. Vielmehr sind möglichst kleine Korngrößen vorteilhaft, bevorzugt im Bereich von 1 bis 20 µm, falls die Lumineszenzstoffe ins Volumen eines Sicherheitspapiers oder Wertdokuments eingebracht werden sollen. Falls die Lumineszenzstoffe als Bestandteile einer Druckfarbe verwendet werden sollen, sollten die Partikel bevorzugt eine Größe von unter 6 µm, besonders unter 3 µm, haben. Auch mikrokristalline Stoffe aus Kristallagglomeraten mit geeigneten Größen sind für den erfindungsgemäßen Verwendungszweck gut einsetzbar. Die Kristalle oder Kristallagglomerate können gegebenenfalls nach dem Glühen durch Mahlen in geeigneten Mühlen, beispielsweise einer Strahlmühle, auf geeignete Korngrößen gebracht werden.

Besonders vorteilhaft ist es, dass bei dem erfindungsgemäß verwendeten Herstellungsverfahren pulverartiges Material in dem gewünschten Korngrößenbereich einfach durch geeignete Wahl der Glühbedingungen erzeugt werden kann. Dazu ist es im Allgemeinen vorteilhaft eine möglichst hohe Glühtemperatur zu wählen, um eine vollständige Reaktion der Edukte und kürzere Glühdauer zu erreichen. Andererseits muss die Glühtemperatur unterhalb des Schmelzpunkts der Zielmatrix gewählt werden, um ein Zusammenschmelze der Partikel zu verhindern. In bestimmten Fällen ist ein weiteres absenken der Glühtemperatur vorteilhaft, um ein übermäßiges Sintern der Partikel zu verhindern bzw. das Kornwachstum zur Erzeugung geeigneter Korngrößen zu begrenzen. Besonders vorteilhaft ist außerdem, dass der Glühprozess einen einfachen und kontrollierten Einbau von Lumineszenzaktivatoren und sonstigen Dotierstoffen erlaubt, da der Anteil an Lumineszenzaktivator/Dotierstoff im Endprodukt allein durch den Anteil des entsprechenden Lumineszenzaktivators/Dotierstoffs an den Ausgangsmaterialien bestimmt wird.

Im folgenden werden einige Ausführungsbeispiele für die Herstellung erfindungsgemäßer Lumineszenzstoffe angegeben.

### Beispiel 1 (nicht erfindungsgemäß)

### Ca_{0.5}NbO₃ dotiert mit Nd (1 mol%)

2.675g CaCO₃, 7.234g Nb₂O₅ und 0.092g Nd₂O₃ werden in einem Achatmörser innig vermischt. Das Gemisch wird in einem Korundtiegel für 10h bei 1150°C geglüht.

### Beispiel 2 (nicht erfindungsgemäß)

### LiNbO₃ dotiert mit Tm (1 mol%)

2.140g Li₂CO₃, 7.747g Nb₂O₅ und 0.113g Tm₂O3 werden in einem Achatmörser innig vermischt. Das Gemisch wird in einem Korundtiegel für 10h bei 1150°C geglüht.

### Beispiel 3 (nicht erfindungsgemäß)

### NaTaO₃ dotiert mit Nd (1 mol%)

1.913g Na2CO₃, 8.025g Ta₂O₅, 0.061g Nd₂O₃ werden in einem Achatmörser innig vermischt. Das Gemisch wird in einem Korundtiegel für 10h bei 1150°C geglüht.

### Beispiel 4

### NaTaO₃ dotiert mit Nd (1 mol%) und Ti (2 mol%)

1.927g Na₂CO₃, 7.953g Ta₂O₃, 0.062g Nd₂O₃, 0.059g TiO₂ werden in einem Achatmörser innig vermischt. Das Gemisch wird in einem Korundtiegel für 10h bei 1150°C geglüht. Im Vergleich zu Ausführungsbeispiel 3 zeigt das Produkt, bedingt durch den Ladungsausgleich mittels Titan, eine ca. um den Faktor 5 stärkere Lumineszenzintensität.

### Beispiel 5 (nicht erfindungsgemäß)

### NaTaO₃ dotiert mit Yb (1 mol%)

1.911g Na₂CO₃, 8.017g Ta₂O₅, 0.072g Yb₂O₃ werden in einem Achatmörser innig vermischt. Das Gemisch wird in einem Korundtiegel für 10h bei 1150°C geglüht.

### Beispiel 6

### NaTaO₃ dotiert mit Yb (1 mol%) und Ti (2 mol%)

1.925g Na₂CO₃, 7.944g Ta₂O₃, 0.072g Yb₂O₃, 0.059g TiO₂ werden in einem Achatmörser innig vermischt. Das Gemisch wird in einem Korundtiegel für 10h bei 1150°C geglüht. Im Vergleich zu Ausführungsbeispiel 5 zeigt das Produkt, bedingt durch den Ladungsausgleich mittels Titan, eine ca. 8mal so hohe Lumineszenzintensität.

### Beispiel 7 (nicht erfindungsgemäß)

### LiTaO₃ dotiert mit Er (1 mol%)

1.415g Li₂CO₃, 8.511g Ta₂O₅ und 0.074g Er₂O₃ werden in einem Achatmörser innig vermischt. Das Gemisch wird in einem Korundtiegel für 10h bei 1150°C geglüht.

### Beispiel 8 (nicht erfindungsgemäß)

Na_{0.2}Sr_{0.4}NbO₃ dotiert mit Er (1%) 0.523g Na₂CO₃, 2.840g SrC0₃, 6.543g Nb₂O₅ und 0.094g Er₂0₃ werden in einem Achatmörser innig vermischt. Das Gemisch wird in einem Korundtiegel für 10h bei 1150°C geglüht.

### Beispiel 9 (nicht erfindungsgemäß)

### K_{0.2}Sr_{0.4}NbO₃ dotiert mit Nd (1%)

0.672g K₂CO₃, 2.799g SrCO₃, 6.448g Nb₂O₅ und 0.082g Nd₂O₃ werden in einem Achatmörser innig vermischt. Das Gemisch wird in einem Korundtiegel für 10h bei 1150°C geglüht.

Durch Variation und Kombination der Lumineszenzstoffe eröffnen sich zahlreiche Möglichkeiten, die Anregungsspektren und die Emissionsspektren der Lumineszenzstoffe zu beeinflussen und so eine Vielzahl von Sicherheitsmerkmalen herzustellen. Neben der Auswertung der Anregungs- und/ oder Emissionsspektren kann ebenso die Lumineszenzlebensdauer bzw. - abklingzeit bei einem Prüfverfahren zur Unterscheidung herangezogen werden. Bei der Auswertung können neben den Wellenlängen der Anregungs- bzw. Emissionslinien auch deren Anzahl und/ oder Form und/ oder deren Intensitäten berücksichtigt werden, womit sich eine beliebige Codierung darstellen lässt. Außerdem können die Lumineszenzstoffe mit einem oder mehreren anderen Merkmalsstoffen, wie magnetischen oder elektrisch leitfähigen Merkmalsstoffen, zu einem Sicherheitsmerkmal kombiniert werden.

Die erfindungsgemäßen Sicherheitsmerkmale werden auf oder in einem Trägermaterial ausgebildet, wodurch je nach Art des Trägermaterials ein Sicherheitselement, ein Sicherheitspapier oder ein Wertdokument entsteht. Beispielsweise können die Lumineszenzstoffe bei der Herstellung eines Sicherheitspapiers oder Wertdokuments auf der Basis von Papier oder Kunststoff der Papiermasse oder Kunststoffmasse während des Herstellungsprozesses zugemischt werden, wobei ein Sicherheitsmerkmal im Volumen des Sicherheitspapiers oder Wertdokuments ausgebildet wird.

Alternativ können die Lumineszenzstoffe in eine Druckfarbe oder eine Beschichtungszusammensetzung eingebracht werden und vollflächig oder teilflächig, beispielsweise in Form von Zeichen oder Mustern, auf eine Oberfläche eines Wertdokuments oder eines Sicherheitspapiers aufgedruckt oder in sonstiger Weise aufgetragen werden. Das dabei entstehende Sicherheitsmerkmal kann beispielsweise eine geometrische oder figürliche Darstellung, eine Schrift oder eine Codierung bilden.

Anstatt der Aufbringung auf oder der Einbringung in ein Trägermaterial in Form eines Sicherheitspapiers oder eines Wertdokuments können die erfindungsgemäßen Sicherheitsmerkmale auch auf separaten Trägermaterialien aus Papier oder Kunststoff oder in separaten Trägermaterialien aus Papier oder Kunststoff ausgebildet werden. Dazu werden die Lumineszenzstoffe bei der Herstellung des separaten Trägermaterials der Papiermasse oder der Kunststoffmasse zugemischt, oder sie werden in eine Beschichtungszusammensetzung oder in eine Druckfarbe eingebracht, die wiederum auf eine Oberfläche des separaten Trägermaterials aufgetragen oder aufgedruckt wird, wie oben für Sicherheitspapier und Wertdokumente als Trägermaterialien beschrieben. Ein dergestalt mit einem Sicherheitsmerkmal ausgestattetes Trägermaterial kann als Sicherheitselement verwendet werden und ganz oder teilweise in ein Sicherheitspapier oder ein Wertdokument eingebettet werden oder an einer Oberfläche eines Sicherheitspapiers oder eines Wertdokuments befestigt werden. Ein erfindungsgemäßes Sicherheitselement kann beispielsweise ein Sicherheitsfaden, eine Melierfaser, ein Etikett oder ein Transferelement sein.

Das Sicherheitsmerkmal, das Sicherheitselement, das Sicherheitspapier bzw. das Wertdokument mit mindestens einem Lumineszenzstoff werden zur Überprüfung der Echtheit mit Licht geeigneter Wellenlänge im Bereich zwischen 400 und 1600 nm, besonders bevorzugt zwischen 500 und 1000 nm, angeregt. Daraufhin wird mindestens eine Eigenschaft (z. B. Bandenintensität, Bandenlage, Abklingzeit) des vom mindestens einen Lumineszenzstoff aufgrund der Anregung emittierten Lichts erfasst und mit für den mindestens einen Lumineszenzstoff bekannten Eigenschaften (z. B. in Beispiel 7: Emission in den Er-Banden bei 983 und 1543 nm) verglichen, wobei Echtheit festgestellt wird, falls die erfassten und erwarteten Eigenschaften ausreichend übereinstimmen, d. h. innerhalb vorgegebener, tolerierbarer Abweichungen.

### Die Erfindung wird im Folgenden anhand einer Figur erläutert. Die in der

Figur gezeigten Proportionen entsprechen nicht den in der Realität vorliegenden Verhältnissen und dienen vornehmlich zur Verbesserung der Anschaulichkeit.

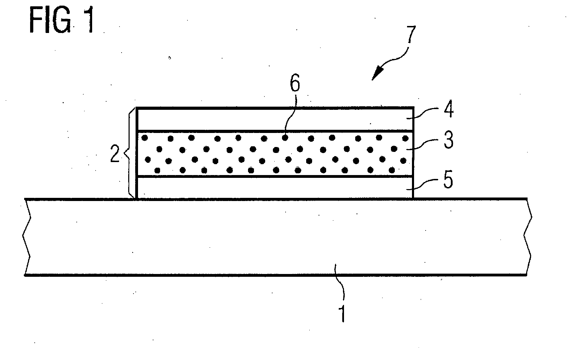

Fig. 1 ein erfindungsgemäßes Wertdokument im Querschnitt.

Fig. 1 zeigt eine Ausführungsform eines erfindungsgemäßen Wertdokuments in Form einer Banknote 7. Die Banknote 7 weist ein Trägermaterial 1 aus Papier auf, auf das ein erfindungsgemäßes Sicherheitselement 2 aufgeklebt ist. Das Sicherheitselement 2 ist ein Aufkleber, der eine Papier- oder Kunststoffschicht 3, eine transparente Abdeckschicht 4 sowie eine Klebstoffschicht 5 aufweist. Der Aufkleber 2 ist über die Klebstoffschicht 5 mit dem Wertdokumentsubstrat 1 verbunden. Der Lumineszenzstoff 6 ist im Volumen der Schicht 3 enthalten, wobei die regellose Anordnung des Lumineszenzstoffs 6 das erfindungsgemäße Sicherheitsmerkmal des Aufklebers 2 bildet.

Alternativ könnte der Lumineszenzstoff auch in einer nicht gezeigten Druckfarbe enthalten sein, die auf eine der Aufkleberschichten, vorzugsweise auf die Oberfläche der Schicht 3, aufgedruckt wird.

## Patentansprüche

1. Sicherheitsmerkmal, aufweisend mindestens einen Lumineszenzstoff zur Echtheitssicherung eines Sicherheitselements, eines Sicherheitspapiers, eines Wertdokuments oder eines sonstigen Gegenstands, wobei der mindestens eine Lumineszenzstoff ein mit mindestens einem Lumineszenzaktivator dotiertes Wirtsgitter aufweist, **dadurch gekennzeichnet, dass** der mindestens eine Lumineszenzstoff die allgemeine Formel
AXO₃ : Z (I)
hat, wobei
A mindestens ein Element ist aus der Gruppe, die aus Alkalimetallen, bevorzugt aus Li, Na und K, besteht,
X Nb und/oder Ta ist,
Z der Lumineszenzaktivator ist und mindestens ein Element ist aus der Gruppe, die aus den Seltenerdmetallen und Übergangsmetallen in den Oxidationsstufen, in denen die betreffenden Übergangsmetalle zu Lumineszenz aktivierbar sind, besteht, und wobei das Wirtsgitter zusätzlich dotiert ist mit einem oder mehreren Elementen E, das
- als Lumineszenzsensibilisator wirkt, der Energie absorbiert und an die lumineszierenden Aktivatoren weiterleitet und ausgewählt ist aus der Gruppe der Übergangsmetallkationen, und/ oder
- zum Ladungsausgleich dient, wobei das einem Ladungsausgleich dienende Element ausgewählt ist aus der Gruppe der Übergangsmetallkationen oder Kationen der Elemente der dritten und vierten Hauptgruppe, und bevorzugt Titan der Oxidationsstufe +4 ist oder Aluminium der Oxidationsstufe +3 ist.

2. Sicherheitsmerkmal nach Anspruch 1, **dadurch gekennzeichnet, dass** der Lumineszenzstoff die allgemeine Formel
AXO₃:Z
hat, wobei
A für Li, Na oder K steht,
X für Nb oder Ta steht, und
Z für ein Seltenerdmetall der Oxidationsstufe +3 oder für Ti³⁺, oder V⁴⁺ oder Cr²⁺ oder Cr³⁺ oder Cr⁴⁺ oder Cr⁵⁺ oder Mn³⁺ oder Mn⁴⁺ oder Mn⁵⁺ oder Mn⁶⁺ steht.

3. Sicherheitsmerkmal nach einem der Ansprüche 1 oder 2, **dadurch gekennzeichnet, dass** der Lumineszenzsensibilisator Chrom der Oxidationsstufe +3 ist.

4. Sicherheitsmerkmal nach einem der Ansprüche 1 bis 3, **dadurch gekennzeichnet, dass** der mindestens eine Lumineszenzstoff ein Alkalimetallniobat oder ein Alkalimetalltantalat ist, bei dem die überschüssige positive Ladung eines Seltenerdmetallkations auf einer Alkalimetall-Position (3+ statt 1+) durch den Einbau von zwei Titankationen (4+) auf Niobat/Tantalat-Plätzen (5+) ausgeglichen wird, d.h. es ergibt sich ein Dotierungsverhältnis von zwei Titankationen pro Seltenerdkation.

5. Sicherheitsmerkmal nach einem der Ansprüche 1 bis 4, **dadurch gekennzeichnet, dass** der Lumineszenzstoff in Form eines Pulvers mit einer Korngröße im Bereich von 1 µm bis 20 µm, bevorzugt < 6 µm, besonders bevorzugt < 3 µm, vorliegt.

6. Sicherheitselement, Sicherheitspapier oder Wertdokument, **dadurch gekennzeichnet, dass** es mit einem Sicherheitsmerkmal nach einem der Ansprüche 1 bis 5 ausgestattet ist.

7. Sicherheitselement, Sicherheitspapier oder Wertdokument nach Anspruch 6, **dadurch gekennzeichnet, dass** der Lumineszenzstoff in das Volumen des Sicherheitselements, des Sicherheitspapiers oder des Wertdokuments eingearbeitet ist.

8. Sicherheitselement, Sicherheitspapier oder Wertdokument, nach Anspruch 6, **dadurch gekennzeichnet, dass** der Lumineszenzstoff mittels einer Beschichtungszusammensetzung oder mittels einer Druckfarbe auf eine Oberfläche des Sicherheitselements oder des Sicherheitspapiers oder des Wertdokuments vollflächig oder bereichsweise aufgetragen oder aufgedruckt ist.

## Claims

1. A security feature, having at least one luminescent substance for authentication of a security element, a security paper, a value document or another object, the at least one luminescent substance having a host lattice doped with at least one luminescence activator, **characterized in that** the at least one luminescent substance has the general formula
AXO₃ : Z (I)
where
A is at least one element from the group consisting of alkali metals, preferably of Li, Na and K,
X is Nb and/or Ta,
Z is the luminescence activator, and is at least one element from the group consisting of the rare earth metals and transition metals in the oxidation states in which the relevant transition metals are activatable to luminesce, and where the host lattice is additionally doped with one or several elements E which
- acts as a luminescence sensitizer which absorbs energy and transfers it to the luminescent activators and is selected from the group of transition metal cations, and/or
- serves for charge equilibration, with the element serving for charge equilibration being selected from the group of transition metal cations or cations of the elements of the third and fourth main groups, and preferably being titanium with the oxidation state +4 or being aluminum with the oxidation state +3.

2. The security feature according to claim 1, **characterized in that** the luminescent substance has the general formula
AXO₃:Z
where
A stands for Li, Na or K,
X stands for Nb or Ta, and
Z stands for a rare earth metal with the oxidation state +3 or for Ti³⁺, or V⁴⁺ or Cr²⁺ or Cr³⁺ or Cr⁴⁺ or Cr⁵⁺ or Mn³⁺ or Mn⁴⁺ or Mn⁵⁺ or Mn⁶⁺.

3. The security feature according to either of claims 1 to 2, **characterized in that** the luminescence sensitizer is chromium with the oxidation state +3.

4. The security feature according to any of claims 1 to 3, **characterized in that** the at least one luminescent substance is an alkali metal niobate or an alkali metal tantalate, in which the excess positive charge of a rare earth metal cation on an alkali metal position (3+ instead of 1+) is equilibrated by the incorporation of two titanium cations (4+) on niobate/tantalate sites (5+), i.e. there results a doping ratio of two titanium cations for each rare earth cation.

5. The security feature according to any of claims 1 to 4, **characterized in that** the luminescent substance is present in the form of a powder with a grain size in the range of 1 µm to 20 µm, preferably < 6 µm, particularly preferably < 3 µm.

6. A security element, security paper or value document, **characterized in that** it is equipped with a security feature according to any of claims 1 to 5.

7. The security element, security paper or value document according to claim 6, **characterized in that** the luminescent substance is incorporated into the volume of the security element, security paper or value document.

8. The security element, security paper or value document according to claim 6, **characterized in that** the luminescent substance is applied or imprinted on a surface of the security element or security paper or value document over the full area or in certain regions by means of a coating composition or by means of a printing ink.

## Revendications

1. Caractéristique de sécurité, comportant au moins une substance luminescente pour la protection de l'authenticité d'un élément de sécurité, d'un papier sécurité, d'un document de valeur ou d'un autre objet, la au moins une substance luminescente comportant un réseau hôte dopé d'au moins un activateur de luminescence, **caractérisée en ce que** la au moins une substance luminescente a la formule générale
AXO₃ : Z (I)
cependant que
A est au moins un élément du groupe qui consiste en des métaux alcalins, de préférence en du Li, Na et K,
X est Nb et/ou Ta,
Z est l'activateur de luminescence et est au moins un élément du groupe qui consiste en les métaux des terres rares et métaux de transition dans les degrés d'oxydation dans lesquels les métaux de transition concernés sont activables de manière à devenir luminescents, et cependant que le réseau hôte est dopé en outre d'un ou de plusieurs éléments E qui
- agit en tant que sensibilisateur de luminescence qui absorbe de l'énergie et la transmet aux activateurs luminescents, et est sélectionné parmi le groupe des cations de métaux de transition , et/ou
- sert à l'équilibrage des charges, cependant que l'élément servant à un équilibrage des charges est sélectionné parmi le groupe des cations de métaux de transition ou des cations des éléments du troisième et quatrième groupe principal, et est de préférence du titane du degré d'oxydation +4 ou de l'aluminium du degré d'oxydation +3.

2. Caractéristique de sécurité selon la revendication 1, **caractérisée en ce que** la substance luminescente a la formule générale
AXO₃ :Z
cependant que
A représente Li, Na et K,
X représente Nb ou Ta, et
Z représente un métal des terres rares du degré d'oxydation +3 ou Ti³⁺, ou V⁴⁺ ou Cr²⁺ ou Cr³⁺ ou Cr⁴⁺ ou Cr⁵⁺ ou Mn³⁺ ou Mn⁴⁺ ou Mn⁵⁺ ou Mn⁶⁺.

3. Caractéristique de sécurité selon la revendication 1 ou 2, **caractérisée en ce que** le sensibilisateur de luminescence est du chrome du degré d'oxydation +3.

4. Caractéristique de sécurité selon une des revendications de 1 à 3, **caractérisée en ce que** la au moins une substance luminescente est un niobate de métal alcalin ou un tantalate de métal alcalin dans lequel la charge excédentaire positive d'un cation de métal des terres rares est équilibrée sur une position de métaux alcalins (3+ au lieu de 1+) par l'insertion de deux cations de titane (4+) sur des emplacements de niobate/tantalate (5+), c'est à dire qu'il en résulte un rapport de dopage de deux cations de titane par cation des terres rares.

5. Caractéristique de sécurité selon une des revendications de 1 à 4, **caractérisée en ce que** la substance luminescente se trouve sous forme d'une poudre dont la taille de grain se situe entre 1 µm et 20 µm, de préférence < 6 µm, particulièrement de préférence < 3 µm.

6. Élément de sécurité, papier sécurité ou document de valeur, **caractérisé en ce qu'**il est équipé d'une caractéristique de sécurité selon une des revendications de 1 à 5.

7. Élément de sécurité, papier sécurité ou document de valeur selon la revendication 6, **caractérisé en ce que** la substance luminescente est incorporée dans le volume de l'élément de sécurité, du papier sécurité ou du document de valeur.

8. Élément de sécurité, papier sécurité ou document de valeur selon la revendication 6, **caractérisé en ce que** la substance luminescente est, au moyen d'une composition de revêtement ou au moyen d'une encre d'impression, appliquée ou imprimée, à pleine surface ou par endroits, sur une surface de l'élément de sécurité ou du papier sécurité ou du document de valeur.
